(19) Europäisches Patentamt / European Patent Office / Office européen des brevets

(11) **EP 3 182 056 A1**

(12) **EUROPEAN PATENT APPLICATION**

(43) Date of publication:
**21.06.2017 Bulletin 2017/25**

(51) Int Cl.:
**G01B 11/12** *(2006.01)*   **G01B 11/24** *(2006.01)*
**G02B 21/00** *(2006.01)*   **G01N 21/954** *(2006.01)*

(21) Application number: **15460127.2**

(22) Date of filing: **20.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.12.2015 PL 41536615**

(71) Applicant: **Instytut Optyki Stosowanej
03-805 Warszawa (PL)**

(72) Inventors:
 • **Kryszczynski, Tadeusz
  01-034 Warszawa (PL)**

 • **Mikucki, Jerzy
  01-934 Warszawa (PL)**
 • **Czyzewski, Adam
  00-132 Warszawa (PL)**
 • **Litwin, Dariusz
  00-681 Warszawa (PL)**
 • **Galas, Jacek
  05-092 Lomianki (PL)**
 • **Sitarek, Stefan
  05-830 Nadarzyn (PL)**

(74) Representative: **Woznicki, Jerzy
Patent Attorney
Al. Niepodleglosci 222 kl. A lok. 20
00-663 Warszawa (PL)**

(54) **OPTICAL CONFOCAL SENSOR FOR MEASURMENTS OF INNER DIAMETERS**

(57) A chromatic confocal distance sensor for measuring inner diameters of hollow objects, comprising a fibre optic coupler (9) connected to a light source and a spectrometer, and a double mirror (2) dividing two light beams from two terminals of the fibre optic coupler (9) into two measuring branches, and a double telecentric lens placed on the optical axis between the double mirror (2) and the fibre optic coupler (9), said double telecentric lens being composed of an aperture diaphragm (5) placed in the focal planes of a chromatic part (3, 4) and an apochromatic part (6, 7, 8), said chromatic part (3, 4) being placed at the double mirror (2) side of the aperture diaphragm (5), and said apochromatic part (6, 7, 8) being placed at the fibre optic coupler (9) side of the aperture diaphragm (5). Furthermore, the reflecting surfaces of the double mirror (2) form a right angle, such that diametrally opposed points on the inner surface of the hollow object are measured.

EP 3 182 056 A1

## Description

The subject-matter of the invention is an optical confocal sensor for measuring inner diameters, especially the inner diameters of smooth pipes.

In the existing sensors referred to as bore gauges, the measurement takes place by contact and their main drawback is the lack of certainty of proper placement during measurement. As a result, instead of a diameter measurement, we obtain a reading that can deviate from the accurate measurement value both in plus and minus. These remarks apply both to double-contact sensors and, to a lesser extent, to top three-contact sensors.

Patent application US 2015146208 describes an optical sensor for measuring diameters, comprising a gradient-index (GRIN) lens and a prism component comprising two adjacent prisms with mirror-like inclined reflecting surfaces. A beam of light delivered to the gradient-index lens via a fibre optic coupler is divided by the prismatic component into two confocal beams creating two opposite measuring branches. A measurement consists in establishing the coordinates of measuring beams focused subsequently on opposite points determining the bore diameter. Prior to measurement sensor calibration is required. A disadvantage of this solution is the limited measurement range resulting from fixed optical parameters of the sensor components.

The purpose of the invention is to construct an optical configuration of the confocal sensor for measuring inner diameters of bores without the drawbacks of the existing sensors used in workshop metrology.

The optical confocal sensor for measuring inner diameters fitted with a fibre optic coupler and an optical element dividing a light beam into two measuring branches, according to the invention is characterised in that the element dividing the light beam into two measuring branches constitutes a double mirror, while within the optical axis between the double mirror and the fibre optic coupler there is a double telecentric lens comprising a chromatic part placed on the double mirror side, of a apochromatic part placed on the side of fibre optic coupler and an aperture diaphragm placed on the focal planes of the chromatic and apochromatic part, whereby the reflecting surfaces of the double mirror form a right angle.

Preferably, the fibre optic coupler is fitted with an adder and a T junction and the T junction is connected with a source of white light delivered to the system and with a spectrophotometer receiving monochromatic light emitted from the system.

Preferably, the chromatic part of the double telecentric lens comprises, at least, two convergent lenses, at the front and back, made of flint glass with an Abbe number lower than 40.

Preferably, the apochromatic part of the double telecentric lens comprises, at least, three lenses, two of which, the convergent and extreme ones are made of fluorite, while the middle lens is made of optical glass with an Abbe number ranging from 49 to 55.

It is also preferably if the double mirror is attached in a sliding way on the optical axis in relation to the double telecentric lens.

Thanks to the use of a double mirror with two reflecting surfaces forming a right angle between them, a change in the direction of both measuring branches with axes forming a straight line was obtained used to measure the inner pipe diameter. The measure of perpendicularity of measuring branches to the inner surface of object is the intensity of signal measured on a spectrophotometer.

Thanks to the use of the chromatic part of the double telecentric lens comprising at least two convergent flint glass lenses with an Abbe number lower than 40, a considerable range of confocal change for the working distance in both measuring branches was obtained.

Thanks to the use of the apochromatic part of the double telecentric lens comprising at least three lenses, two of which, the convergent, extreme ones are made of fluorite, while the middle lens is made of optical glass with an Abbe number ranging from 49 to 55, a high degree of sphero-chromatic aberration correction of the secondary position and size spectral image necessary to focus a monochromatic light beam on the terminals of the adder being a part of the fibre optic coupler was obtained.

Thanks to the use of a double mirror attached in a sliding way in the optical axis in relation to the double telecentric lens, a change in the inner diameters of measured pipes was obtained.

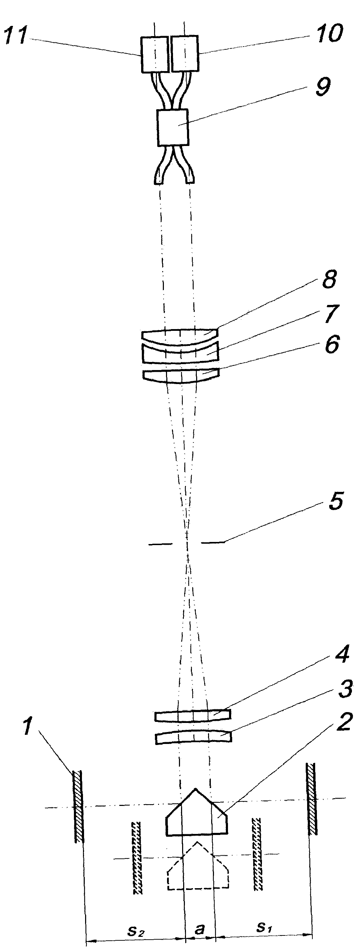

The subject of the invention is shown in an example in the figure presenting a schematic diagram of a confocal sensor optical system including the double mirror in two measuring configurations in relation to the pipe tested.

The confocal optical sensor for measuring inner diameters is fitted with fibre optic coupler 9 and optical element in the form of double mirror 2 that divides a white light beam delivered to the system into two measuring branches. The reflecting surfaces of the double mirror 2 form a highly accurate right angle. In the optical axis between the double mirror 2 and the fibre optic coupler 9 there is a double telecentric lens placed, comprising chromatic part 3, 4 located at the side of double mirror 2, of apochromatic part 6, 7, 8 located at the side of fibre optic coupler 9, and the aperture diaphragm 5 located in focal planes of the chromatic part 3, 4 and the apochromatic part 6, 7, 8. The fibre optic coupler 9 is fitted with an adder and a T junction. The T junction is connected with the source of white light 10 introduced into the system and spectrophotometer 11 reflecting monochromatic light emitted from the system.

The subject of the measurement is the inner diameter D of a smooth pipe 1 or a bore of other object, expressed by the following formula:

The variables include: confocal distance $s_1$ of one of the measuring branches, confocal distance $s_2$ of the other measuring branch and measuring branch span constant a.

$$D = s_1 + s_2 + a$$

In the example of embodiment, the double telecentric lens has in its middle aperture diaphragm 5 installed with an internal diameter $\varnothing = 8$ mm, placed in the focuses of chromatic parts 3, 4 and the apochromatic parts 6, 7, 8, through which two field beams forming the measuring branches pass. Those beams focus, at one side on the inner diameter of the smooth pipe 1, while at the other, on the terminals of the fibre optic coupler adder 9. The span of measuring branches a is 8 mm. The focal distances of the chromatic part 3, 4 and the apochromatic 6, 7, 8 of the double telecentric lens are 64 mm. The chromatic part 3, 4 of the double telecentric lens comprises two convergent lenses made of flint glass with an Abbe number lower than 40. The preferable range of chromatic distance change for confocal distances $s_1$ and $s_2$ in both measuring distances is 4 mm. The apochromatic part 6,7,8 of the double telecentric lens comprises three lenses 6, 7, 8 the two extreme convergent lenses 6, 8 are made of fluorite, while the middle lens 7 is made of optical glass with a preferable Abbe number ranging from 49 to 55.

The double mirror 2 can be installed in a sliding way in relation to the double telecentric lens. In the measuring arrangement marked with a dashed line as shown in the figure, where the pipe has a lower diameter, the measurement is carried out by using the same principle as after changing the position of the double mirror 2 in relation to the double telecentric lens.

The optical system of the confocal sensor according to the invention should be fitted with a source of white light, of good quality, including a continuous spectrum of visible light waves ranging from 0.4 to 0.7 micron.

Claims

1. An optical confocal sensor for measuring inner diameters fitted with a fibre optic coupler (9) and an optical element dividing a light beam into two measuring branches, **characterised in that** the element dividing the light beam into two measuring branches constitutes a double mirror (2), while within the optical axis between the double mirror (2) and the fibre optic coupler (9) there is a double telecentric lens composed of a chromatic part (3, 4) placed on the double mirror side (2), of a apochromatic part (6, 7, 8) placed at the side of fibre optic coupler (9), and an aperture diaphragm (5) placed on the focal planes of the chromatic (3, 4) and apochromatic part (6, 7, 8), whereby the reflecting surfaces of the double mirror (2) form a right angle.

2. The sensor according to claim 1, wherein the fibre optic coupler (9) is fitted with an adder and a T junction, and the T junction is connected with a source of white light (10) delivered to the system and a spectrophotometer (11) receiving monochromatic light emitted from the system.

3. The sensor according to claim 1, wherein the chromatic part (3, 4) of the double telecentric lens comprises, at least, two convergent lenses, the front one (3) and the back one (4), made of flint glass with an Abbe number lower than 40.

4. The sensor according to claim 1, wherein the apochromatic part (6, 7, 8) of the double telecentric lens comprises at least three lenses, two of which, the convergent extreme ones (6, 8) are made of fluorite, while the middle lens (7) is made of optical glass with an Abbe number ranging from 49 to 55.

5. The sensor according to claim 1, wherein the double mirror (2) is attached in a sliding way in the optical axis in relation to the double telecentric lens.

11

10

9

8

7

6

5

4

3

1

2

$s_2$  $a$  $s_1$

Europäisches
Patentamt

European
Patent Office

Office européen
des brevets

## EUROPEAN SEARCH REPORT

Application Number

EP 15 46 0127

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/153296 A1 (SCHICK ANTON [DE]) 5 July 2007 (2007-07-05) * paragraph [0056] - paragraph [0061]; figure 2 * * paragraph [0010] * * paragraph [0020] - paragraph [0022] * * paragraph [0049] - paragraph [0051] * | 1-5 | INV. G01B11/12 G01B11/24 G02B21/00 G01N21/954 |
| Y | SCHUHMANN R ET AL: "TELEZENTRISCHE SYSTEME FUER DIE OPTISCHE MESS- UND PRUEFTECHNIK. TELECENTRIC SYSTEMS FOR OPTICAL MEASUREMENT AND TESTING", TECHNISCHES MESSEN TM, R.OLDENBOURG VERLAG. MUNCHEN, DE, vol. 65, no. 4, April 1998 (1998-04), pages 131-136, XP000781182, ISSN: 0171-8096 * section 4.2; figure 10 * * sections 2,3; figures 2-5 * | 1-5 | |
| Y | MATTHIAS HILLENBRAND ET AL: "Parallelized chromatic confocal sensor systems", PROCEEDINGS SPIE, vol. 8788, 13 May 2013 (2013-05-13), page 87880V, XP055263687, US ISSN: 0277-786X, DOI: 10.1117/12.2020334 ISBN: 978-1-62841-832-3 * section 3.1; figure 2 * | 1-5 | TECHNICAL FIELDS SEARCHED (IPC) G01B G02B G01N A61B |
| A | US 2009/237677 A1 (AOKI HIROSHI [JP] ET AL) 24 September 2009 (2009-09-24) * paragraph [0065] - paragraph [0069]; figure 8 * | 5 | |

The present search report has been drawn up for all claims

| Place of search | Date of completion of the search | Examiner |
|---|---|---|
| Munich | 18 April 2016 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 46 0127

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2016

| Patent document cited in search report | | Publication date | Patent family member(s) | | Publication date |
|---|---|---|---|---|---|
| US 2007153296 | A1 | 05-07-2007 | DE | 102005059550 A1 | 14-06-2007 |
| | | | EP | 1797813 A1 | 20-06-2007 |
| | | | US | 2007153296 A1 | 05-07-2007 |
| US 2009237677 | A1 | 24-09-2009 | CN | 101558281 A | 14-10-2009 |
| | | | EP | 2093536 A1 | 26-08-2009 |
| | | | JP | 5560558 B2 | 30-07-2014 |
| | | | KR | 20090091218 A | 26-08-2009 |
| | | | US | 2009237677 A1 | 24-09-2009 |
| | | | WO | 2008072369 A1 | 19-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015146208 A